# EUROPEAN PATENT SPECIFICATION

(11) **EP 2 631 165 B1**
(45) Date of publication and mention of the grant of the patent: **23.03.2016**
(21) Application number: 12194760.0
(22) Date of filing: 29.11.2012
(51) Int. Cl.: B62M 6/45, B60L 7/18

(54) **Power-assisted bicycle**
Stromunterstütztes Fahrrad
Bicyclette à commande assistée

(30) Priority: 27.02.2012 JP 2012039983; 01.08.2012 JP 2012171094
(43) Date of publication of application: 28.08.2013
(73) Proprietor: Honda Motor Co., Ltd., Tokyo 107-8556 (JP)
(72) Inventor: Hashimoto, Masayuki, Saitama, 351-0193 (JP)
(74) Representative: Beder, Jens

(56) References cited:
- EP-A1- 0 798 204
- EP-A1- 2 481 625
- EP-A2- 0 168 905
- EP-A2- 1 886 913
- DE-A1- 10 250 645
- JP-A- 7 149 280

## Description

The present invention relates to a power-assisted bicycle, and particularly to a power-assisted bicycle wherein, upon braking or upon running on a downhill, a motor can function as a generator to execute regenerative power generation.

Conventionally, in a power-assisted bicycle wherein pedaling force by human power is detected to assist the driving force by a motor, a configuration is known wherein, upon braking or upon running on a downhill, a motor operates as a generator to execute regenerative power generation. A battery is charged by electric power generated by the regenerative power generation to extend the running distance of the power-assisted bicycle on a single charge.

Patent Document 1 discloses a power-assisted bicycle wherein it is used as an execution condition for regenerative power generation that the pedaling force is zero. Further, in the power-assisted bicycle, the magnitude of the amount of regeneration is changed in response to the amount of brake operation, the variation amount of the amount of brake operation and the vehicle speed.
[Patent Document 1]
Japanese Patent No. 3882993

Incidentally, in the technique disclosed in Patent Japanese Patent No. 3882993, since it is used as an execution condition for regenerative power generation that the pedaling force is zero, the regenerative power generation is not executed as long as some pedaling force is detected. However, in actual running of the power-assisted bicycle, when it runs on a downhill or even on a flat ground, it runs frequently while it is pedaled by comparatively low pedaling force. Therefore, the technique disclosed in Japanese Patent No. 3882993 has a subject that the regenerative power generation is not executed regardless of a running state which is effective for the regenerative power generation.

EP-A-0 798 204 discloses a bicycle having the features of the preamble of claim 1.

It is an object of the present invention to solve the subject of the conventional technique described above and provide a power-assisted bicycle wherein regenerative power generation can be executed also in a running state in which low pedaling force is applied.

### [Means for Solving the Problem]

In order to achieve the object described above, according to the present invention, a power-assisted bicycle (1) having a pedaling force sensor (SE3) which detects pedaling force inputted to pedals (13L, 13R) and a motor (17) which assists driving force in response to an output of the pedaling force sensor (SE3), has a first characteristic that the power-assisted vehicle includes a motor controlling section (16) configured to control the motor (17), and descending slope estimation means (80) which estimates a descending slope of a road surface based on an acceleration (α) of a vehicle body of the power-assisted bicycle (1), wherein the motor controlling section (16) controls, when it is estimated by the descending slope estimation means (80) that the road surface has a descending slope, the motor (17) to function as a generator to carry out regenerative power generation, and the descending slope estimation means (80) estimates that the road surface has a descending slope when the acceleration (α) exceeds a descending slope regeneration starting threshold value (α1) and the pedaling force (Q) detected by the pedaling force sensor (SE3) is lower than an assist starting threshold value (Q1).

Further, the power-assisted bicycle has a second characteristic that the motor (17) is configured such that, also upon freewheel running during which the pedals (13L, 13R) do not have an input thereto, the motor (17) is driven to rotate by rotational driving force transmitted thereto from a driving wheel (WR), and the acceleration (α) of the vehicle body is calculated based on an output of a motor rotational speed sensor (SE1) which detects a speed of rotation of the motor (17).

Further, the power-assisted bicycle has a third characteristic that the motor controlling section (16) changes the regeneration amount of the regenerative power generation so that the acceleration (α) of the vehicle body may be fixed irrespective of the degree of the downward slope.

Further, the power-assisted bicycle has a fourth characteristic that at least one upper limit vehicle speed in accordance with the acceleration (α) is set by the descending slope estimation means (80), and the motor controlling section (16) changes the regeneration amount of the regenerative power generation so that the upper limit vehicle speed may not be exceeded.

Further, the power-assisted bicycle has a fifth characteristic that the acceleration (α) of the vehicle body is calculated based on an output of a vehicle speed sensor (SE2) provided on an axle of a front wheel (WF) or a rear wheel (WR).

Further, the power-assisted bicycle has a sixth characteristic that, when a brake switch (SW) for detecting a brake operation of the power-assisted bicycle is off and the acceleration (α) exceeds the descending slope regeneration starting threshold value (α1), the motor controlling section (16) estimates that the road surface has a descending slope and executes the regenerative power generation as descending slope regenerative power generation.

Further, the power-assisted bicycle has a seventh characteristic that, when the brake switch (SW) is on and a vehicle speed (V) exceeds a brake regeneration starting threshold value (V1), the motor controlling section (16) executes brake regenerative power generation whose power generation amount is greater than that by the descending slope regenerative power generation.

Further, the power-assisted bicycle has an eighth characteristic that the descending slope estimation means (80) estimates that the road surface has a descending slope also in the case where a state in which the acceleration (α) exceeds a threshold value (α3) which is lower than the descending slope regeneration starting threshold value (α1) continues for a predetermined time period (n) and besides the pedaling force (Q) detected by the pedaling force sensor (SE3) is lower than the assist starting threshold value (Q1).

### [Effects of the Invention]

According to the first characteristic, the power-assisted bicycle includes the motor controlling section configured to control the motor and the descending slope estimation means which estimates a descending slope of a road surface based on an acceleration of the vehicle body of the power-assisted bicycle. Further, the motor controlling section controls, when it is estimated by the descending slope estimation means that the road surface has a descending slope, the motor to function as a generator to carry out regenerative power generation. Further, the descending slope estimation means estimates that the road surface has a descending slope when the acceleration exceeds the descending slope regeneration starting threshold value and pedaling force detected by the pedaling force sensor is lower than the assist starting threshold value. Therefore, from an actual situation of riding of the bicycle that the bicycle frequently runs while the rider treads the pedals during running on a downhill or a flat ground by freewheel running, when the pedaling force is comparatively low, the regeneration power generation control can be executed. Consequently, improvement of the energy efficiency can be achieved.

According to the second characteristic, the motor is configured such that, also upon freewheel running during which the pedals do not have an input thereto, the motor is driven to rotate by rotational driving force transmitted thereto from the driving wheel, and the acceleration of the vehicle body is calculated based on an output of the motor rotational speed sensor which detects a speed of rotation of the motor. Therefore, the motor rotational speed sensor serves also as a function of the vehicle speed sensor, and reduction of the number of parts and simplification in configuration can be anticipated.

According to the third characteristic, the motor controlling section changes the regeneration amount of the regenerative power generation so that the acceleration of the vehicle body may be fixed irrespective of the degree of the downward slope. Therefore, the acceleration upon downhill running can be fixed irrespective of the degree of the descending slope using the resistance to the motor rotation involved in regenerative power generation.

According to the fourth characteristic, at least one upper limit vehicle speed in accordance with the acceleration is set by the descending slope estimation means, and the motor controlling section changes the regeneration amount of the regenerative power generation so that the upper limit vehicle speed may not be exceeded. Therefore, downhill running can be executed while keeping the predetermined vehicle speed irrespective of the degree of the descending slope using the resistance to the motor rotation involved in regenerative power generation.

According to the fifth characteristic, the acceleration of the vehicle body is detected based on the output of the vehicle speed sensor provided on the axle of the front wheel or the rear wheel. Therefore, the acceleration of the vehicle body can be detected by a simple configuration.

According to the sixth characteristic, when the brake switch for detecting a brake operation of the power-assisted bicycle is off and the acceleration exceeds the descending slope regeneration starting threshold value, the motor controlling section estimates that the road surface has a descending slope and executes the regenerative power generation as descending slope regenerative power generation. Therefore, it is possible to easily detect a freewheeling state on a descending slope or the like and execute appropriate regenerative power generation. Further, since an acceleration which can be easily grasped sensuously by the rider is used as a condition for descending slope regenerative power generation, a starting timing of regenerative power generation which complies with the sense of the rider can be obtained readily in comparison with an alternative case in which the vehicle speed, which is liable to be changed by the acceleration or the pedaling force, is used as a trigger for starting of regenerative power generation.

According to the seventh characteristic, when the brake switch is on and the vehicle speed exceeds the brake regeneration starting threshold value, the motor controlling section executes brake regenerative power generation whose power generation amount is greater than that by the descending slope regenerative power generation. Therefore, it is possible to execute higher regeneration brake power generation than descending slope regenerative power generation in response to a deceleration will of the rider.

According to the eighth characteristic, the descending slope estimation means estimates that the road surface has a descending slope also in the case where a state in which the acceleration exceeds the threshold value which is lower than the descending slope regeneration starting threshold value continues for the predetermined time period and besides the pedaling force detected by the pedaling force sensor is lower than the assist starting threshold value. Therefore, even if an acceleration lower than the descending slope regeneration starting threshold value is detected, if this is outputted continuously, then a descending slope decision can be executed.

FIG. 1 is a left side elevational view of a power-assisted bicycle according to an embodiment of the present invention.
FIG. 2 is a left side elevational view showing essential part of the power-assisted bicycle.
FIG. 3 is a right side elevational view showing essential part of the power-assisted bicycle.
FIG. 4 is a sectional view taken along line A-A of FIG. 3.
FIG. 5 is a block diagram showing a configuration of a motor controlling section which executes assist/regeneration control and associated components.
FIG. 6 is a state transition diagram illustrating a general configuration of the assist/regeneration control.
FIG. 7 is a flow chart illustrating a procedure of the assist/regeneration control.
FIG. 8 is a graph illustrating a flow of specified torque full output control.

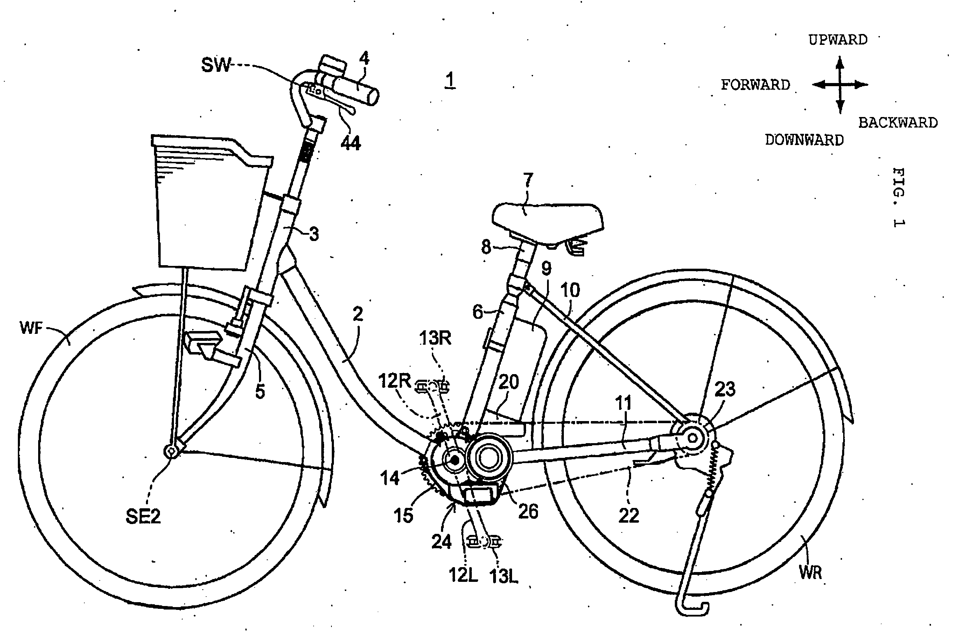

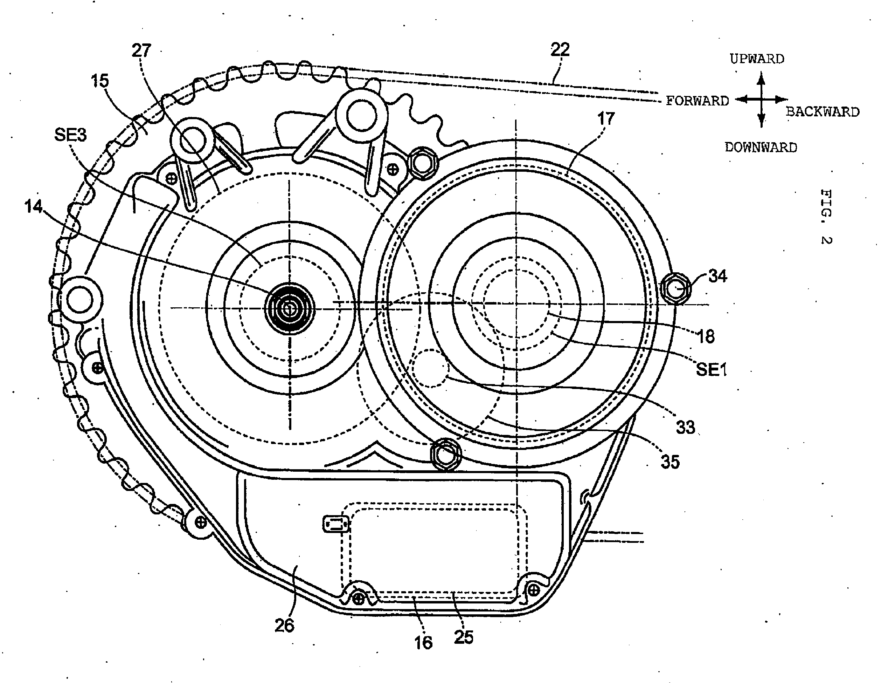

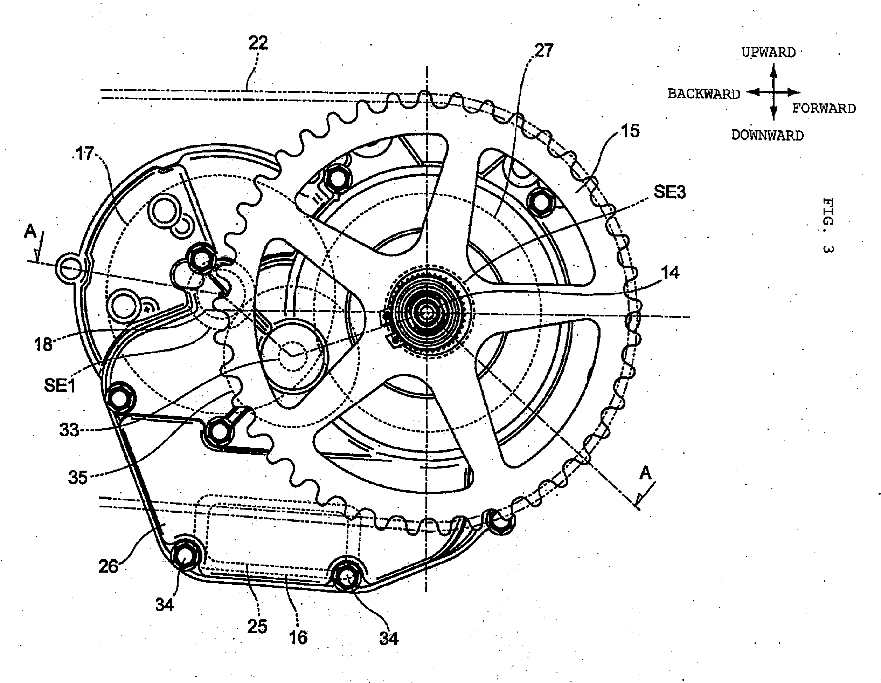

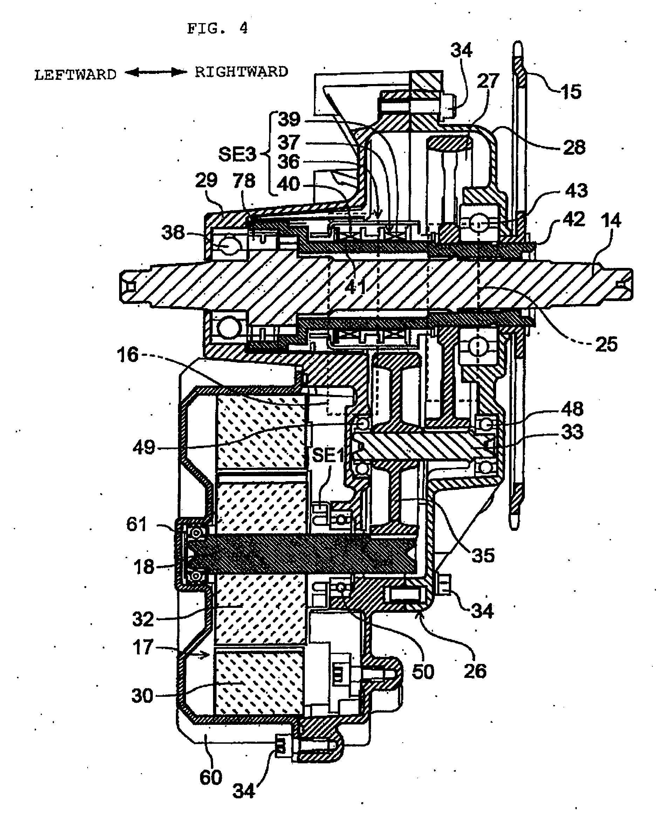

In the following, a preferred embodiment of the present invention is described in detail with reference to the drawings. FIG. 1 is a left side elevational view of a power-assisted bicycle 1 according to an embodiment of the present invention. FIG. 2 is a left side elevational view showing essential part of the power-assisted bicycle 1 of FIG. 1 and FIG. 3 is a right side elevational view of the same, and FIG. 4 is a sectional view taken along line A-A of FIG. 3.

The power-assisted bicycle 1 includes a head pipe 3 positioned at a front portion of a vehicle body, a down frame 2 extending rearwardly and downwardly from the head pipe 3, and a seat pipe 6 erected uprightly from a rear end of the down frame 2. A front fork 5 extending downwardly is connected for steering operation to the head pipe 3, and a front wheel WF is supported for rotation at a lower end of the front fork 5. A steering bar 4 is provided at an upper end of the head pipe 3, and a pair of left and right brake levers 44 for the front and rear wheels are attached to the opposite ends of the steering bar 4. A brake switch SW for detecting a braking operation is provided at a supporting portion for each of the brake levers 44.

A rear fork 11 extending rearwardly is disposed at a rear end of the down frame 2, and a rear wheel WR is supported for rotation at a rear end of the rear fork 11. Further, a pair of left and right stays 10 are disposed between an upper portion of the seat pipe 6 and a rear portion of the rear fork 11.

The down frame 2 and the rear fork 11 support an assist driving unit 24 thereon. A seat post 8 for allowing an upward and downward position of a seat 7 to be adjusted thereon is supported on the seat pipe 6. A battery 9 for supplying electric power to the assist driving unit 24 is removably attached to a stay 20 of the seat pipe 6 rearwardly of the seat pipe 6.

A crankshaft 14 extending in a vehicle widthwise direction is disposed such that it extends through the assist driving unit 24 and the sprocket wheel 15. A crank 12L having a pedal 13L and another crank 12R having another pedal 13R are fixed to the opposite sides of the crankshaft 14 such that, if a rider operates the pedals 13L and 13R, then rotational torque is applied to the crankshaft 14. The crankshaft 14 is supported for rotation in the inner side of a tubular hollow member 42 through a one-way clutch 78 (refer to FIG. 4), and the sprocket wheel 15 is fixed to the outer periphery side of the hollow member 42. Rotation of the sprocket wheel 15 is transmitted to a sprocket wheel 23 on the rear wheel WR side through a chain 22.

The assist driving unit 24 includes, in the inside of a case 26 as a housing thereof, a brushless motor (which may be hereinafter referred to simply as motor) 17, a driving driver 25, a controller 16, a driving gear wheel 35, an output power shaft 33, and an output power gear wheel 27. The driving driver 25 drives the motor 17. The controller 16 carries out PWM control of the driving driver 25 based on an output value of a pedaling force sensor hereinafter described. The driving gear wheel 35 meshes and rotates with a drive shaft 18 of the motor 17, and the output power shaft 33 rotates integrally with the driving gear wheel 35. The output power gear wheel 27 meshes and rotates with the output power shaft 33. The output power gear wheel 27 is fixed to the hollow member 42 of the crankshaft 14 similarly to the sprocket wheel 15. The output power shaft 33 is supported for rotation by a bearing 48 fixed to a left side case half 28 and another bearing 49 fixed to a right side case half 29.

A motor rotational speed sensor SE1 for detecting the speed of rotation of the motor 17 is provided for the drive shaft 18 of the motor 17. Meanwhile, a vehicle speed sensor SE2 is provided for an axle of the front wheel WF, and a pedaling force sensor SE3 for detecting the pedaling force by the rider is provided for the crankshaft 14. The motor rotational speed sensor SE1 is configured from a magnet provided at an outer circumferential portion of the drive shaft 18 of the motor 17, and a Hall IC. Meanwhile, the pedaling force sensor SE3 is configured from a torque sensor 37 (refer to FIG. 4) of the magnetostrictive type disposed on an outer circumferential portion of the crankshaft 14. It is to be noted that the motor rotational speed sensor SE1 may otherwise be provided for the rear wheel WR or the like.

The controller 16 as a motor controlling section calculates force by which the rider treads the pedals 13L and 13R in the vertical direction from a rotational torque value detected by the torque sensor 37. Then, the controller 16 PWM controls the driving driver 25 of the motor 17 so that assisting torque defined by the tread force and an assist ratio corresponding to the vehicle speed of the power-assisted bicycle 1 may be generated.

The driving driver 25 has switching elements for three phases of a U phase, a V phase and a W phase. The controller 16 on/off controls the switching elements for the U, V and W phases at a predetermined duty ratio to PWM control the driving driver 25. The driving driver 25 converts dc electric power of the battery 9 into three-phase ac power by the PWM control and supplies the three-phase ac power to stator coils of the motor 17 for the U, V and W phases.

Assist torque generated by the motor 17 is transmitted to the output power shaft 33 through the drive shaft 18 and the driving gear wheel 35. The assist torque transmitted to the output power shaft 33 is transmitted to the hollow member 42 of the crankshaft 14 through the output power gear wheel 27. Consequently, combined force of the rotational torque applied to the crankshaft 14 by the rider and the assist torque provided by the motor 17 is transmitted to the sprocket wheel 23 of the rear wheel side through the chain 22.

The motor 17 includes a rotor 32 having, for example, eight permanent magnets of the N and S poles disposed alternately in a circumferential direction. The motor 17 further includes, for example, twelve stators 30 having stator windings of three phases for generating a rotating magnetic field for rotating the rotor 32. The drive shaft 18 is fixed to and rotates integrally with the rotor 32.

The assist driving unit 24 has a mechanism which rotates the sprocket wheel 15 when the pedals 13L and 13R are treaded in an advancing direction (forward direction), but does not rotate the sprocket wheel 15 when the pedals 13L and 13R are treaded in the reverse direction by an action of the one-way clutch 78.

The one-way clutch 78 is provided between the crankshaft 14 and the hollow member 42 fitted on an outer circumference of the crankshaft 14. The crankshaft 14 is supported on the rear end side thereof in the figure for rotation on the right side case half 29 of the case 26 by a bearing 38. The hollow member 42 is supported on the left end side thereof in the figure on the left side case half 28 of the case 26 by a bearing 43. On an outer periphery of the hollow member 42 on the left end side, splines for fixing the sprocket wheel 15 are formed.

If the pedals 13L and 13R are treaded in the forward direction, then the crankshaft 14 rotates and the one-way clutch 78 is brought into engagement to rotate the hollow member 42. On the other hand, if the pedals 13L and 13R are treaded in the opposite direction to the forward direction, then although the crankshaft 14 rotates, the one-way clutch 78 rotates idly and the hollow member 42 does not rotate. Further, if the sprocket wheel 15 is driven by rotation of the rear wheel WR, then although the motor 17 is driven to rotate, the power by the rotation is not transmitted to the pedals 13L and 13R.

The torque sensor 37 is supported on an outer peripheral portion of the hollow member 42 by a support member 36, and a magnetic film 41 is provided on the hollow member 42. The support member 36 is supported such that the torque sensor 37 it is opposed to the magnetic film 41 and is rotatable relative to the hollow member 42. The torque sensor 37 converts a variation in inductance of detection coils 39 and 40 caused by magnetostrictive generated by rotation of the hollow member 42 into a voltage and outputs the voltage to the controller 16. The torque sensor 37 detects a rotational toque value at predetermined intervals of time.

The motor rotational speed sensor SE1 for detecting the rotational speed of the motor 17 is configured from a magnet fixed to the drive shaft 18 of the motor 17, and a Hall IC which detects a passing state of the magnet. A cover 60 which covers the motor 17 is attached to the case 26 by a plurality of bolts 34 disposed along an outer circumference of the motor 17. The drive shaft 18 of the motor 17 is supported for rotation by a bearing 38 fixed to the cover 60 and another bearing 50 fixed to the right side case half 29 at positions leftwardly and rightwardly of the rotor 32.

The motor 17 is accommodated and disposed in a space partitioned from the torque sensor 37 forwardly and downwardly of the crankshaft 14 with respect to the vehicle body. The driving driver 25 and the controller 16 are fixed to a wall face of the case 26 downwardly of the torque sensor 37 with respect to the vehicle body.

The drive shaft 18 and the output power shaft 33 of the motor 17 are configured such that power is normally transmitted therebetween, and when the rear wheel WR is driven to rotate, also the motor 17 is driven to rotate. Consequently, upon braking, upon freewheeling on a downhill or a flat road surface or in a like case, it is possible to cause the motor 17 to operate as a generator to execute regenerative power generation.

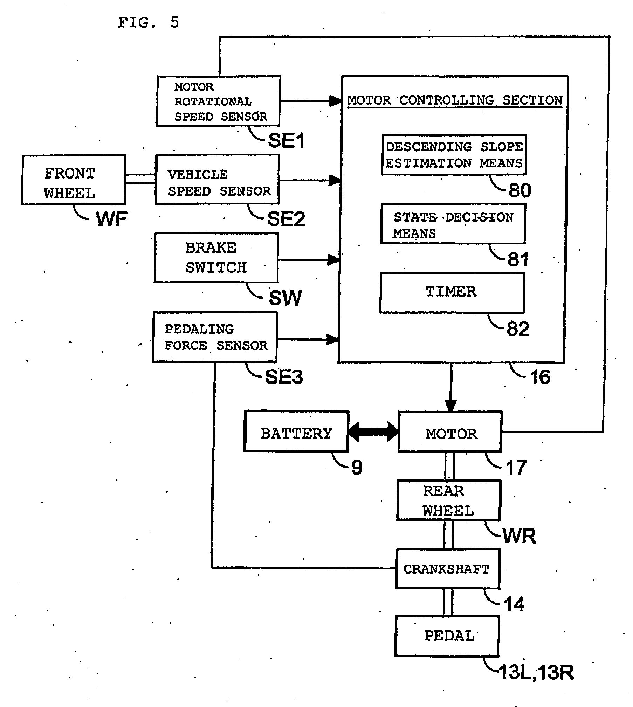

FIG. 5 is a block diagram showing a configuration of the motor controlling section which executes assist/regeneration control and associated elements. To the controller (controller) 16, sensor information from the motor rotational speed sensor SE1 (Hall IC and magnet), vehicle speed sensor SE2 and pedaling force sensor SE3 (torque sensor 37) and information from the brake switch SW are inputted. The controller 16 drives, based on the information inputted thereto, the motor 17 as a mover to provide assist torque and drives the motor 17 as a mover to generate regenerative power such that it can execute control to charge the battery 9 by the power generation.

The controller 16 includes descending slope estimation means 80, state decision means 81 and a timer 82. The descending slope estimation means 80 has a function of estimating, based on the sensor information, whether or not the road surface on which the power-assisted bicycle 1 is running has a downhill slope or the degree of the slope if the road surface has a downhill slope. Further, the state decision means 81 has a function of deciding a control state of the motor 17 based on the sensor information and brake information. The timer 82 measures various kinds of time and, for example, can acquire time information for calculating the speed of rotation of the motor 17 based on pulse signal information outputted from the Hall IC which configures the motor rotational speed sensor SE1.

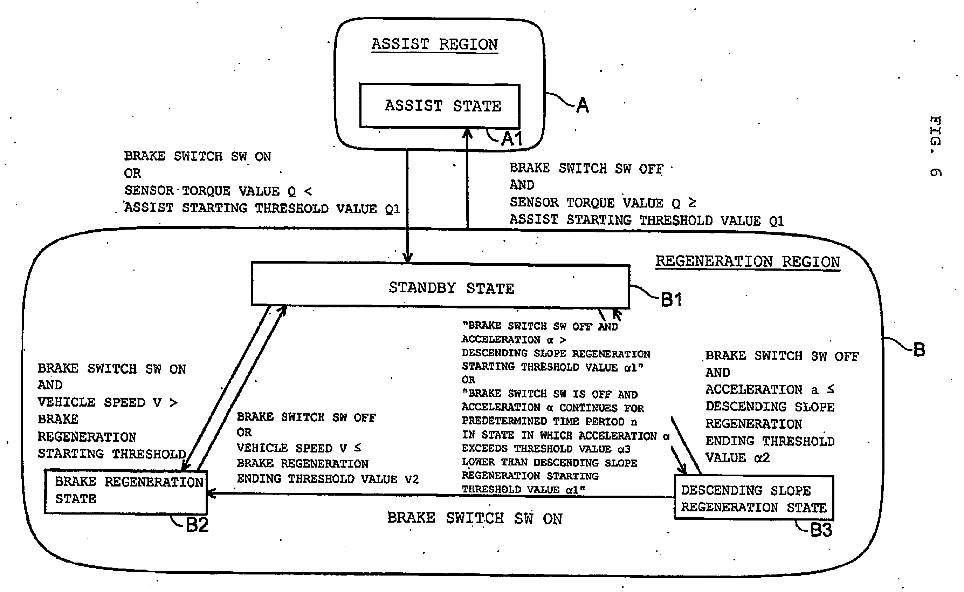

FIG. 6 is a state transition diagram illustrating a general configuration of the assist/regeneration control. The control state of the motor 17 is, when roughly classified, from an assist region A and a regeneration region B. The assist region A includes an assist state A1. The assist state A1 is a control state in which driving force assistance in accordance with the pedaling force is carried out.

Meanwhile, the regeneration region B includes a standby state B1, a brake regeneration state B2 and a descending slope regeneration state B3. The standby state B1 corresponds to a state in which none of driving force assistance and regenerative power generation is executed. Meanwhile, the brake regeneration state B2 corresponds to a regenerative power generation controlling state which is executed using it as a trigger that the brake switch SW is switched on. Further, the descending slope regeneration state B3 corresponds to a regenerative power generation controlling state which is executed upon running on a downhill or upon freewheeling which does not involve a brake operation.

First, when the power supply to the power-assisted bicycle 1 is turned on, the control state of the motor 17 is the standby state B1. In this standby state B1, if the brake switch SW is off and the sensor torque value Q detected by the pedaling force sensor SE3 is equal to or higher than an assist starting threshold value Q1 determined in advance, then the control state changes over to the assist state A1 and driving force assist control is started. It is to be noted that the changeover to the assist state A1 is carried out in the same conditions in the entire condition including not only the standby state B1 but also the brake regeneration state B2 and the descending slope regeneration state B3, namely, in the regeneration region B. Then, if, in the assist state A1, the brake switch SW is switched on or the sensor torque value Q becomes lower than the assist starting threshold value Q1, then the control state returns to the standby state B1 and the driving force assist control is ended.

Then, if, in the standby state B1, the brake switch SW is on and the vehicle speed V exceeds a brake regeneration starting threshold value V1, then the control state changes over the brake regeneration state B2 and regenerative power generation control.is started. By including the switching on of the brake switch SW in the changeover conditions from the standby.state B1 to the brake regeneration state B2, it is possible to execute higher regeneration brake power generation than descending slope power generation in response to a deceleration will of the rider. Then, if, in the brake regeneration state B2, the brake switch SW is turned off or the vehicle speed V becomes equal to or lower than a brake regeneration ending threshold value V2, then the control state returns to the standby state B1 and the regenerative power generation control is ended. It is to be noted that threshold values V1 and V2 are set so as to have a relationship of V1 > V2.

Further, if, in the standby state B1, the brake switch SW is off and the acceleration α exceeds a descending slope regeneration starting threshold value α1, then the control state changes over to the descending slope regeneration state B3 and regenerative power generation is started. In other words, if the power supply to the power-assisted bicycle 1 is on, then if, in the state in which the sensor torque value Q detected by the pedaling force sensor SE3 is lower than the assist starting threshold value Q1, the brake switch SW is off and the acceleration α is higher than the descending slope regeneration starting threshold value α1, then the motor controlling section 16 estimates that the road surface has a descending slope. In response to the estimation, the motor controlling section 16 executes regenerative power generation. This descending slope regenerative power generation is set as regeneration power generation in which the power generation amount and the regeneration brake amount are small in comparison with those in brake regenerative power generation.

Further, in the present embodiment, as a condition for the changeover from the standby state B1 to the descending slope regeneration state B3, it can be added that "a predetermined time period n elapses in a state in which the brake switch SW is off and the acceleration α exceeds a threshold value α3 which is equal to or lower than the descending slope regeneration starting threshold value α1." By the addition, the condition for changeover from the standby state B1 to the descending slope regeneration state B3 is that "the brake switch SW is off and the acceleration α is higher than the descending slope regeneration starting threshold value α1" or that "the predetermined time period n elapses in a state in which the brake switch SW is off and the acceleration α is higher than the threshold value α3 which is equal to or lower than the descending slope regeneration starting threshold value α1."

The decision in which the threshold value α3 and the predetermined time period n (for example, five seconds) measured by the timer 82 (refer to FIG. 5) is set in order to raise the accuracy in a descending slope decision. In particular, even in a case where an acceleration equal to or lower than the descending slope regeneration starting threshold value α1 is detected, it is made possible to conditionally carry out a descending slope decision and a descending slope decision can be prevented from being carried out every time the rider stops pedaling during running on a flat ground or the like.

That a descending slope decision is carried out every time the rider stops pedaling during running on a flat ground or the like arises from a structure of the assist driving unit 24 according to the present embodiment. As described hereinabove, the assist driving unit 24 is configured such that, through an action of the one-way clutch 78, the sprocket wheel 15 is rotated when the pedals 13L and 13R are treaded in the advancing direction (forward direction) but the sprocket wheel 15 is not rotated when the pedals 13L and 13R are treaded in the reverse direction. Further, when the sprocket wheel 15 is driven to rotate by rotation of the rear wheel WR, although the motor 17 is driven to rotate, the power by the rotation of the motor 17 is not transmitted to the pedals 13L and 13R thereby to allow regenerative power generation. On the other hand, the vehicle speed of the power-assisted bicycle 1 is set so as to be calculated based on the speed of rotation of the motor 17.

In the assist driving unit 24 having the configuration described above, if the rider stops pedaling during running on a flat ground or the like, then the motor assist is instantaneously changed over from on to off. Further, since some lash exists between the motor shaft and the driving system, some time lag arises after the motor shaft stops until the lash is decreased by rotation of the driving system and co-rotation of the motor shaft is started. In other words, since an acceleration is generated on the motor shaft when the motor shaft enters a co-rotation state from a stopping state, if the condition for the descending slope decision involves only decision of presence or absence of pedaling force and increase of the acceleration, then there is the possibility that a descending slope decision may be made from the acceleration.

Therefore, in the present embodiment, as a condition for the changeover from the standby state B1 to the descending slope regeneration state B3, it is added that "the predetermined time period n elapses in the state in which the brake switch SW is off and the acceleration α is higher than the threshold value α3" so that a descending slope decision is prevented from being made because the pedaling is stopped. Here, the descending slope regeneration starting threshold value α1 exceeding the threshold value α3 is set, the threshold value α3 is set to a value equal to or smaller than an acceleration which may possibly be detected when the rider stops pedaling during running on a flat ground or the ike. Consequently, a descending slope decision based on the instantaneous acceleration β arising from the lash of the driving system can be prevented, and even if the threshold value α3 is equal to or lower than the acceleration β, if this is outputted continuously, a descending slope decision can be made.

From the foregoing, the assist driving unit according to the present embodiment can easily detect a freewheeling state on a descending slope or the like and execute appropriate regenerative power generation. Further, an acceleration which can be easily grasped sensuously by the rider is used as a condition for descending slope regenerative power generation. Accordingly, a starting timing of regenerative power generation complying with the sense of the rider can be obtained readily in comparison with an alternative case in which the vehicle speed, which is liable to be changed by the acceleration or the pedaling force, is used as a condition for starting of regenerative power generation.

Then, if, in the descending slope regeneration state B3, the brake switch SW is off and the acceleration α becomes equal to or lower than a descending slope regeneration ending threshold value α2, then the control state returns to the standby state B1 and the regenerative power generation control is ended. It is to be noted that the threshold values α1 and α2 are set so as to satisfy the relationship of α1 > α2.

According to the settings described above, even when the rider operates the pedals upon freewheeling on a downhill or a flat ground, if the pedaling power is lower than the assist starting threshold value Q1, then it is possible to carry out downhill slope decision based on the acceleration α to execute regenerative power generation. In particular, the descending slope estimation means 80 shown in FIG. 5 estimates, when the acceleration α exceeds the descending slope regeneration starting threshold value α1, that the road surface has a downhill slope. At this time, even if the sensor torque value Q is outputted because the rider treads the pedals, if the sensor torque value Q is lower than the assist starting threshold value Q1, then the descending slope estimation means 80 decides that the road surface has a downhill slope and executes regenerative power generation control.

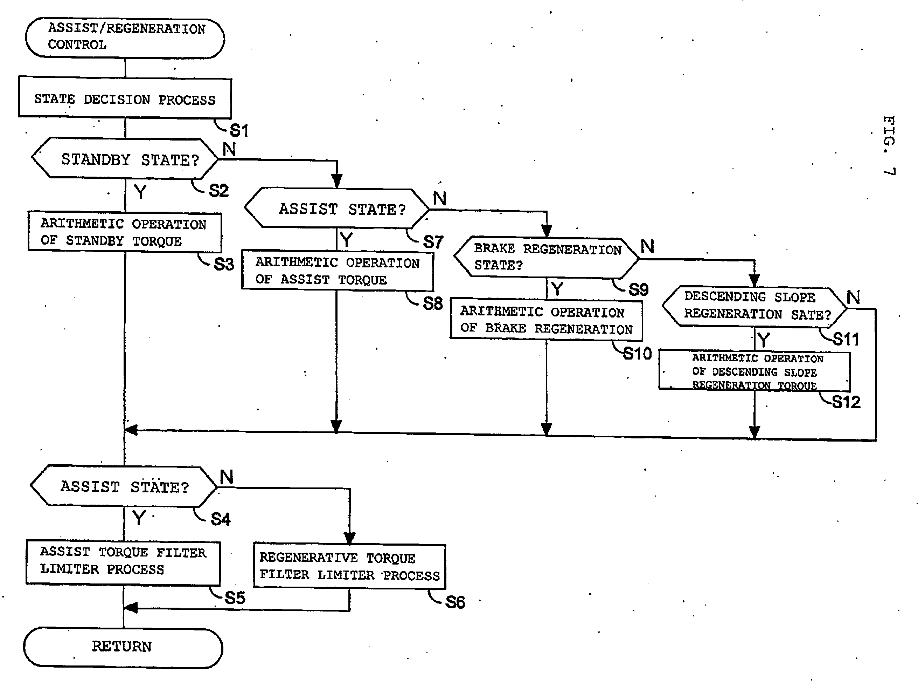

FIG. 7 is a flow chart illustrating a procedure of the assist/regeneration control. At step S1, a state decision process of the control state is executed by the state decision means 81 (refer to FIG. 5). At step S2, it is decided whether or not the control state is the standby state B1. If an affirmative decision is made, then the processing advances to step S3, at which standby torque arithmetic operation is executed. The standby torque can be set, for example, to zero or to substantially zero.

If a negative decision is made at step S2, in other words, if the control state is not the standby state B1, then the processing advances to step S7, at which the control state is the assist state A1. However, if an affirmative decision is made, then the processing advances to step S8, at which arithmetic operation of assist torque is executed. The arithmetic operation of assist torque can be carried out using a data table set in advance. The assist torque is set such that, for example, it increases in response to increase of the pedaling force.

On the other hand, if a negative decision is made at step S7, then the processing advances to step S9, at which it is decided that the control state is the brake regeneration state B2. If an affirmative decision is made, then the processing advances to step S10, at which arithmetic operation of brake regeneration torque is executed. The arithmetic operation of brake regeneration torque can be carried out using a data table set in advance. The brake regeneration torque is set such that, for example, it increases in response to increase of the vehicle speed and besides it increases as the brake operation amount increases.

On the other hand, if a negative decision is made at step S9, then the processing advances to step S11, at which it is decided whether or not the control state is the descending slope regeneration state B3. If an affirmative decision is made, then the processing advances to step S12, at which arithmetic operation of the descending slope regeneration torque is carried out. The arithmetic operation of the descending slope regeneration torque can be carried out using a data table set in advance. The descending slope regeneration torque can be set such that, for example, it increases as the acceleration increases or as the vehicle speed increases. Further, the descending slope regeneration torque can be determined such that the acceleration on a descending slope may be fixed or an upper limit vehicle speed set in response to the acceleration is maintained. Such control can be executed by feedback control based on an output of the motor rotational speed sensor SE1 or the vehicle speed sensor SE2. Furthermore, a data table in which the assist starting threshold value Q1 of the pedaling force is increased or decreased in response to the acceleration or the vehicle speed may be provided. It is to be noted that, if a negative decision is made at step S11, then it is determined that the state decision process is not settled as yet, and the processing advances to step S4.

Referring back to the flow chart, at step S4, it is decided that the control state is the assist state A1. If an affirmative decision is made, then a filter limiter process of applying upper limit value restriction of the assist torque or the like is executed, thereby to end the series of controls. On the other hand, if a negative decision is made at step S4, then a filter limiter process of applying upper limit value restriction to the regeneration torque is executed, thereby to end the series of controls. It is to be noted that the upper limit value restriction to the assist torque and the regeneration torque can be set, for example, in compliance with the laws and regulations of the individual countries.

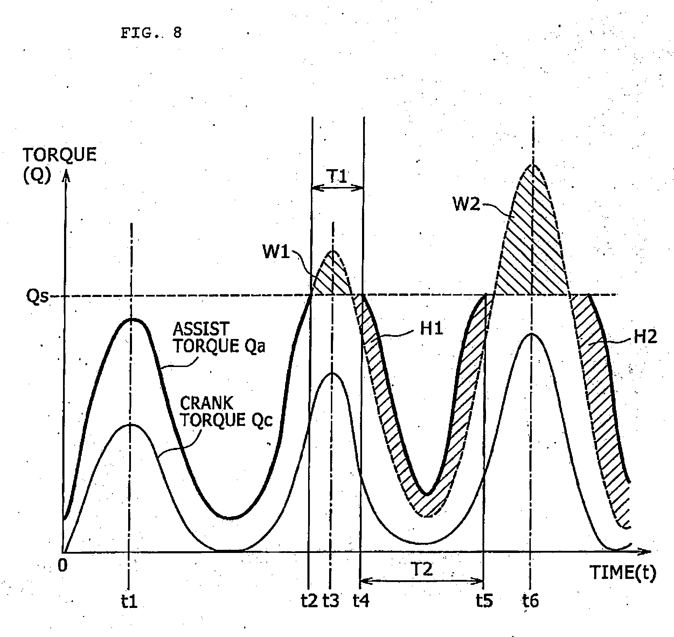

FIG. 8 is a graph illustrating a flow of specified torque output control. As a technique for the driving force assistance of the power-assisted bicycle 1, specified torque full output control can be applied. This is a controlling technique which applies restriction to the output power of an assist driving unit so that, when the entire assist torque which is to be outputted originally cannot be outputted, a portion of the assist torque which relates to the output power restriction is distributed forwardly and backwardly so that reduction of the burden on the rider can be expanded with a natural output characteristic.

In this graph, crank torque Qc generated by the rider operating the pedals is indicated by a solid line, and assist torque Qa outputted in response to the crank torque Qc is indicated by a thick solid line. The crank torque Qc is generated such that the apex thereof which appears at time t1, t3 and t6 gradually becomes higher, and also the assist torque Qa increases accordingly.

However, in the example of the present graph, since output limit Qs is provided for the assist torque Qa, assist torque Qa exceeding this output limit Qs cannot be outputted, and the output power within a period T1 from time t2 to time t4. The specified torque full output control distributes a work load W1, which should be outputted originally within this output restriction period, to the crank torque Qc within a period from time t4 to time t5 so as to be added to the crank torque Qc thereby to compensate for the assist torque.

According to this controlling method, the work load (W1, W2) which exceeds the upper limit and is cut can be added as torque H1, H2 in the direction of the time axis along the crank torque Qc. Therefore, the assist torque which is to be outputted originally can be utilized effectively.

It is to be noted that setting of the assist starting threshold value Q1 for the pedaling force at which driving force assistance is to be started and setting of the brake regeneration starting threshold value V1, brake regeneration ending threshold value V2, descending slope regeneration starting threshold value α1 and descending slope regeneration ending threshold value α2 and so forth are not limited to those in the embodiment but can be changed in various manners. The control technique for a power-assisted bicycle according to the present invention can be applied to a driving force assist apparatus which is applied to various vehicles such as a tricycle.

1 ... Power-assisted bicycle, 9 ... Battery, 13L, 13R ... Pedal, 14 ... Crankshaft, 16 ... Controller (motor controlling section), 17 ... Motor, 24 ... Assist driving unit, 26 ... Case, 80 ... Descending slope estimation means, 81 ... State decision means, 82 ... Timer, SE1 ... Motor rotational speed sensor (Hall IC and magnet), SE2 ... Vehicle speed sensor, SE3 ... Pedaling force sensor (torque sensor 37), SW ... Brake switch, WF ... Front wheel, WR ... Rear wheel, A ... Assist region, A1 ... Assist state, B ... Regeneration region, B1 ... Standby state, B2 ... Brake regeneration state, B3 ... Descending slope regeneration state, α1 ... Descending slope regeneration starting threshold value, α3 ... Threshold value, Q1 ... Assist starting threshold value

## Claims

1. A power-assisted bicycle (1) having a pedaling force sensor (SE3) which detects pedaling force inputted to pedals (13L, 13R) and a motor (17) which assists driving force in response to an output of the pedaling force sensor (SE3), comprising:
a motor controlling section (16) configured to control the motor (17); and
descending slope estimation means (80) which estimates a descending slope of a road surface based on an acceleration (α) of a vehicle body of the power-assisted bicycle (1); wherein
the motor controlling section (16) controls, when it is estimated by the descending slope estimation means (80) that the road surface has a descending slope, the motor (17) to function as a generator to carry out regenerative power generation, and
the descending slope estimation means (80) estimates that the road surface has a descending slope when the acceleration (α) exceeds a descending slope regeneration starting threshold value (α1) and the pedaling force (Q) detected by the pedaling force sensor (SE3) is lower than an assist starting threshold value (Q1),
**characterized in that**
the descending slope estimation means (80) estimates that the road surface has a descending slope also in the case where a state in which the acceleration (α) exceeds a threshold value (α3) which is lower than the descending slope regeneration starting threshold value (α1) continues for a predetermined time period (n) and besides the pedaling force (Q) detected by the pedaling force sensor (SE3) is lower than the assist starting threshold value (Q1).

2. The power-assisted bicycle according to claim 1, wherein the motor (17) is configured such that, also upon freewheel running during which the pedals (13L, 13R) do not have an input thereto, the motor (17) is driven to rotate by rotational driving force transmitted thereto from a driving wheel (WR), and
the acceleration (α) of the vehicle body is calculated based on an output of a motor rotational speed sensor (SE1) which detects a speed of rotation of the motor (17).

3. The power-assisted bicycle according to claim 1 or 2, wherein the motor controlling section (16) changes the regeneration amount of the regenerative power generation so that the acceleration (α) of the vehicle body may be fixed irrespective of the degree of the downward slope.

4. The power-assisted bicycle according to any one of claims 1 to 3, wherein at least one upper limit vehicle speed in accordance with the acceleration (α) is set by the descending slope estimation means (80), and
the motor controlling section (16) changes the regeneration amount of the regenerative power generation so that the upper limit vehicle speed may not be exceeded.

5. The power-assisted bicycle according to claim 1, wherein the acceleration (α) of the vehicle body is calculated based on an output of a vehicle speed sensor (SE2) provided on an axle of a front wheel (WF) or a rear wheel (WR).

6. The power-assisted bicycle according to claim 1, wherein, when a brake switch (SW) for detecting a brake operation of the power-assisted bicycle is off and the acceleration (α) exceeds the descending slope regeneration starting threshold value (α1), the motor controlling section (16) estimates that the road surface has a descending slope and executes the regenerative power generation as descending slope regenerative power generation.

7. The power-assisted bicycle according to claim 6, wherein, when the brake switch (SW) is on and a vehicle speed (V) exceeds a brake regeneration starting threshold value (V1), the motor controlling section (16) executes brake regenerative power generation whose power generation amount is greater than that by the descending slope regenerative power generation.

## Patentansprüche

1. Antriebskraftunterstützes Fahrrad (1), das einen Pedalierkraft-Sensor (SE3) hat, der eine Pedalierkraft, die Pedalen (13L, 13R) zugeführt wird, erfasst, und einen Motor (17), der eine Antriebskraft in Reaktion auf eine Ausgangsleistung des Pedalierkraft-Sensors (SE3) unterstützt, aufweisend:
einen Motorsteuerungsabschnitt (16), der eingerichtet ist, um den Motor (17) zu steuern; und
Gefälle-Schätzmittel (80), die ein Gefälle einer Fahrbahnoberfläche basierend auf einer Beschleunigung (α) eines Fahrzeugkörpers des antriebskraftunterstützten Fahrrads (1) schätzen; wobei
der Motorsteuerungsabschnitt (16) den Motor (17) steuert, um als Generator zu arbeiten um regenerative Energieerzeugung auszuführen, wenn durch die Gefälle-Schätzmittel (80) abgeschätzt wird, dass die Fahrbahnoberfläche ein Gefälle aufweist, und
die Gefälle-Schätzmittel (80) schätzen, dass die Fahrbahnoberfläche ein Gefälle hat, wenn die Beschleunigung (α) einen Gefälle-Regenerationsbeginn-Grenzwert (α1) übersteigt und die Pedalkraft (Q), die durch den Pedalierkraft-Sensor (SE3) erfasst wird, niedriger, als ein Unterstützungsbeginn-Grenzwert (Q1) ist,
**dadurch gekennzeichnet, dass**
die Gefälle-Schätzmittel (80) auch dann schätzen, dass die Fahrbahnoberfläche ein Gefälle hat, in dem Fall, in dem ein Zustand für eine vorbestimmte Zeitdauer (n) andauert, in dem eine Beschleunigung (α) einen Grenzwert (α3) übersteigt, der kleiner ist als der Gefälle-Regenerationsbeginn-Grenzwert (α1), und außerdem die Pedalkraft (Q), die durch den Pedalierkraft-Sensor (SE3) erfasst wird, niedriger als der Unterstützungsbeginn-Grenzwert (Q1) ist.

2. Antriebskraftunterstütztes Fahrrad gemäß Anspruch 1, wobei der Motor (17) so eingerichtet ist, dass auch während des Freilauffahrens, währenddessen die Pedale (13L, 13R) keine Eingangsleistung haben, der Motor (17) angetrieben wird, um durch eine Rotationsantriebskraft, die ihm von einem Antriebsrad (WR) übermittelt wird, zu rotieren, und
die Beschleunigung (α) des Fahrzeugkörpers basierend auf einer Ausgabe eines Motordrehzahlsensors (SE1), der eine Rotationsgeschwindigkeit des Motors (17) erfasst, berechnet wird.

3. Antriebskraftunterstütztes Fahrrad gemäß Anspruch 1 oder 2, wobei der Motorsteuerungsabschnitt (16) die Regenerationsmenge der regenerativen Energieerzeugung so ändert, dass die Beschleunigung (α) des Fahrzeugkörpers unabhängig von einem Grad des Gefälles fixiert werden kann.

4. Antriebskraftunterstütztes Fahrrad gemäß einem der Ansprüche 1 bis 3, wobei wenigstens ein oberes Limit für die Fahrzeuggeschwindigkeit in Übereinstimmung mit der Beschleunigung (α) durch die Gefälle-Schätzmittel (18) gesetzt ist, und
der Motorsteuerungsabschnitt (16) die Regenerationsmenge der regenerativen Energieerzeugung ändert, so dass das obere Limit für die Fahrzeuggeschwindigkeit nicht überschritten wird.

5. Antriebskraftunterstütztes Fahrrad gemäß Anspruch 1, wobei die Beschleunigung (α) des Fahrzeugkörpers basierend auf einer Ausgabe eines Fahrzeuggeschwindigkeitssensors (SE2) berechnet wird, der an einer Achse eines Vorderrads (WF) oder eines Hinterrads (WR) vorgesehen ist.

6. Antriebskraftunterstütztes Fahrrad gemäß Anspruch 1, wobei, wenn ein Bremsschalter (SW) zum Erfassen einer Bremsbetätigung des antriebskraftunterstützten Fahrrads aus ist und die Beschleunigung (α) den Gefälle-Regenerationsbeginn-Grenzwert (α1) übersteigt, der Motorsteuerungsabschnitt (16) schätzt, dass die Fahrbahnoberfläche ein Gefälle hat und die regenerative Energieerzeugung als regenerative Gefälle-Energieerzeugung ausführt.

7. Antriebskraftunterstütztes Fahrrad gemäß Anspruch 6, wobei, wenn der Bremsschalter (SW) an ist und eine Fahrzeuggeschwindigkeit (V) einen Bremsregenerationsbeginn-Grenzwert (V1) übersteigt, der Motorsteuerungsabschnitt (16) eine regenerative Brems-Energieerzeugung ausführt, deren Energieerzeugungsmenge größer ist als die der regenerativen Gefälle-Energieerzeugung.

## Revendications

1. Bicyclette à assistance électrique (1) présentant un capteur de force de pédalage (SE3) qui détecte une force de pédalage entrée sur les pédales (13L, 13R) et un moteur (17) qui assiste la force d'entraînement en réponse à une sortie du capteur de force de pédalage (SE3), comprenant :
une section de commande de moteur (16) configurée pour commander le moteur (17) ; et
un moyen d'estimation de pente descendante (80) qui estime une pente descendante d'une surface de route sur la base d'une accélération (α) d'une ossature de véhicule de la bicyclette à assistance électrique (1) ; dans laquelle
la section de commande de moteur (16) commande lorsqu'il est estimé par le moyen d'estimation de pente descendante (80) que la surface de route a une pente descendante, le moteur (17) pour qu'il fonctionne comme un générateur afin de réaliser la génération de puissance régénérative et
le moyen d'estimation de pente descendante (80) estime que la surface de route a une pente descendante lorsque l'accélération (α) excède une valeur seuil de démarrage de régénération de pente descendante (α1) et la force de pédalage (Q) détectée par le capteur de force de pédalage (SE3) est inférieure à une valeur seuil de démarrage d'assistance (Q1),
**caractérisée en ce que**
le moyen d'estimation de pente descendante (80) estime que la surface de route a une pente descendante également au cas où un état, dans lequel l'accélération () excède une valeur seuil (α3) qui est inférieure à la valeur seuil de démarrage de régénération de pente descendante (α1), continue pour une période de temps prédéterminée (n) et en plus la force de pédalage (Q) détectée par le capteur de force de pédalage (SE3) est inférieure à la valeur seuil de démarrage d'assistance (Q1).

2. Bicyclette à assistance électrique selon la revendication 1, dans laquelle le moteur (17) est configuré de sorte que suite au roulement en roue libre, pendant lequel les pédales (13L, 13R) n'ont pas une entrée sur celles-ci, le moteur (17) soit aussi entraîné en rotation par la force d'entraînement de rotation transmise à celui-ci par une roue menante (WR) et
l'accélération (α) de l'ossature de véhicule est calculée sur la base d'une sortie d'un capteur de vitesse de rotation de moteur (SE1) qui détecte une vitesse de rotation du moteur (17).

3. Bicyclette à assistance électrique selon la revendication 1 ou 2, dans laquelle la section de commande de moteur (16) change la quantité de régénération de la génération de puissance régénératrice de sorte que l'accélération (α) de l'ossature de véhicule puisse être fixée en dépit du degré de la pente descendante.

4. Bicyclette à assistance électrique selon l'une quelconque des revendications 1 à 3, dans laquelle au moins une vitesse de véhicule de limite supérieure selon l'accélération (α) est définie par le moyen d'estimation de pente descendante (80) et
la section de commande de moteur (16) change la quantité de régénération de la génération de puissance régénératrice de sorte que la vitesse de véhicule de limite supérieure ne puisse pas être excédée.

5. Bicyclette à assistance électrique selon la revendication 1, dans laquelle l'accélération (α) de l'ossature de véhicule est calculée sur la base d'une sortie d'un capteur de vitesse de véhicule (SE2) prévu sur un essieu d'une roue avant (WF) ou d'une roue arrière (WR).

6. Bicyclette à assistance électrique selon la revendication 1, dans laquelle, lorsqu'un commutateur de frein (SW) pour détecter une opération de freinage de la bicyclette à assistance électrique est éteint et l'accélération (α) excède la valeur seuil de démarrage de régénération de pente descendante (α1), la section de commande de moteur (16) estime que la surface de route a une pente descendante et exécute la génération de puissance régénératrice comme génération de puissance régénératrice de pente descendante.

7. Bicyclette à assistance électrique selon la revendication 6, dans lequel, lorsque le commutateur de frein (SW) est allumé et une vitesse de véhicule (V) excède une valeur seuil de démarrage de régénération de frein (V1), la section de commande de moteur (16) exécute la génération de puissance régénératrice de frein, dont la quantité de génération de puissance est supérieure à celle fournie par la génération de puissance régénératrice de pente descendante.
